# EUROPEAN PATENT APPLICATION

(11) **EP 2 326 138 A1**
(43) Date of publication of application: **25.05.2011**
(21) Application number: 10177141.8
(22) Date of filing: 16.09.2010
(51) Int. Cl.: H04W 88/16

(54) **Communication method and gateway device based on SIP phone**

(30) Priority: 20.11.2009 CN 200910223974
(71) Applicant: Huawei Device Co., Ltd., Longgang District Shenzhen Guangdong 518129 (CN)
(72) Inventor: Zhang, Ke, 518129, Shenzhen Guangdong (CN)
(74) Representative: Charles, Glyndwr

(57) **Abstract**

The present invention relates to the communication field and discloses a communication method and gateway device based on Session Initiation Protocol, SIP, phones. To enable a SIP phone to communicate over the Circuit Switched, CS, domain of a High Speed Packet Access, HSPA, network, the technical solution of the present invention includes: when receiving SIP signaling from a SIP phone, sending an HSPA call command associated with the SIP signaling to an HSPA network device; when receiving an HSPA call command from the HSPA network device, sending SIP signaling associated with the HSPA call command to the SIP phone; when receiving a Real-Time Transport, RTP, packet from the SIP phone, sending Pulse Code Modulation, PCM, data associated with the RTP packet to the HSPA network device; and when receiving PCM data from the HSPA network device, sending an RTP packet associated with the PCM data to the SIP phone. The present invention is applicable to SIP communications.

## Description

### Field of the Invention

The present invention relates to the communication field, and in particular, to a communication method and gateway device based on Session Initiation Protocol, SIP, phones.

### Background of the Invention

A home gateway is an integrated access gateway designed for family users. It may provide services for such devices as SIP phones. Currently, the home gateway supports Asymmetric Digital Subscriber Line, ADSL and High Speed Packet Access, HSPA.

If the home gateway selects the ADSL access mode, the SIP phones controlled by the home gateway will connect to an Internet Protocol Multimedia Subsystem, IMS, through Voice over IP, VoIP, to implement voice functions. In the process, the home gateway may act as a router, an Application Layer Gateway, ALG, or a proxy to enable the voice functions of SIP phones.

If the home gateway selects the HSPA access mode, the home gateway can further select a Packet Switched, PS, or Circuit Switched, CS, access mode for voice service processing. In PS access mode, the SIP phones can still implement the voice functions through VoIP.

During the implementation of the present invention, the inventor finds at least the following weakness in the prior art: the method provided in the prior art is unable to realize the communication of SIP phones in CS access mode.

### Summary of the Invention

Embodiments of the present invention provide a SIP phone based communication method and gateway device to enable a SIP phone to communicate over the CS domain of an HSPA network.

For the above purpose, the following technical solution is provided:

A SIP phone based communication method includes:
when receiving SIP signaling from a SIP phone, sending an HSPA call command associated with the SIP signaling to an HSPA network device; or, when receiving an HSPA call command from the HSPA network device, sending SIP signaling associated with the HSPA call command to the SIP phone; and
when receiving a Real-Time Transport, RTP, packet from the SIP phone, sending Pulse Code Modulation, PCM, data associated with the RTP packet to the HSPA network device; or, when receiving PCM data from the HSPA network device, sending an RTP packet associated with the PCM data to the SIP phone.

A gateway device includes:
a signaling and packet receiving unit, configured to receive SIP signaling or an RTP packet sent by a SIP phone;
a command and data receiving unit, configured to receive an HSPA call command or PCM data sent by an HSPA network device;
a translating unit, configured to: obtain an HSPA call command associated with the SIP signaling received by the signaling and packet receiving unit; or obtain SIP signaling associated with the HSPA call command received by the command and data receiving unit; or obtain PCM data associated with the RTP packet received by the signaling and packet receiving unit; or obtain an RTP packet associated with the PCM data received by the command and data receiving unit;
a signaling and packet sending unit, configured to send the SIP signaling or the RTP packet obtained by the translating unit to the SIP phone; and
a command and data sending unit, configured to send the HSPA call command or the PCM data obtained by the translating unit to the HSPA network device.

The SIP phone based communication method and gateway device provided according to the embodiments of the present invention send an HSPA call command associated with the SIP signaling received from the SIP phone to the HSPA network device, or send the SIP signaling associated with an HSPA call command received from the HSPA network device to the SIP phone, thus establishing a signaling connection between the SIP phone and the HSPA network device. In addition, the communication method and gateway device send PCM data associated with the RTP packet received from the SIP phone to the HSPA network device, or send an RTP packet associated with the PCM data received from the HSPA network device to the SIP phone, thus establishing a data connection between the SIP phone and the HSPA network device. Thereby, the SIP phone can communicate over the CS domain of the HSPA network. Further, the SIP phone can back up a voice service via a wireless CS link.

### Brief Description of the Drawings

To better explain the technical solution of the embodiments of the present invention, the drawings required in the description of the embodiments of the present invention will be described in brief. It is apparent that the drawings described below are only exemplary embodiments of the present invention. Those skilled in the art can obtain other drawings based on the drawings without creative efforts.
FIG. 1 illustrates a communication process of a SIP phone based communication method provided according to an embodiment of the present invention in the case that the SIP phone is a caller;
FIG. 2 illustrates a communication process of the SIP phone based communication method provided according to the embodiment of the present invention in the case that the SIP phone is a callee;
FIG. 3 illustrates a structure of a gateway device provided according to an embodiment of the present invention; and
FIG. 4 illustrates an internal structure of the gateway device provided according to the embodiment of the present invention.

### Detailed Description of the Embodiments

The technical solution of the embodiments of the present invention is hereinafter described in detail with reference to the accompanying drawings. It is apparent that the embodiments described herein are only exemplary embodiments of the present invention. All other embodiments obtained by those skilled in art based on the embodiments herein without creative efforts are within the scope of the present invention.

To enable the communication of SIP phones over the CS domain of an HSPA network, a SIP phone based communication method is provided according to an embodiment of the present invention. The SIP phone based communication method includes:
when receiving SIP signaling from a SIP phone, sending an HSPA call command associated with the SIP signaling to an HSPA network device; or, when receiving an HSPA call command from the HSPA network device, sending the SIP signaling associated with the HSPA call command to the SIP phone; and
when receiving an RTP packet from the SIP phone, sending PCM data associated with the RTP packet to the HSPA network device; or, when receiving PCM data from the HSPA network device, sending an RTP packet associated with the PCM data to the SIP phone.

The HSPA network device in the embodiment of the present invention is a communication device applied in the HSPA network, for example, a data card device (such as a 3G data card, generally with a USB interface) connected to a Business Support System, BSS.

Through the SIP phone based communication method provided according to the embodiment of the present invention, an HSPA call command associated with the SIP signaling received from the SIP phone is sent to the HSPA network device, or the SIP signaling associated with an HSPA call command received from the HSPA network device is sent to the SIP phone, thus establishing a signaling connection between the SIP phone and the HSPA network device. In addition, through this method, PCM data associated with the RTP packet received from the SIP phone is sent to the HSPA network device, or an RTP packet associated with the PCM data received from the HSPA network device is sent to the SIP phone, thus establishing a data connection between the SIP phone and the HSPA network device. Thereby, the SIP phone can communicate over the CS domain of the HSPA network. Further, the SIP phone can back up a voice service via a wireless CS link.

The method provided according to the above embodiment will be further described in two scenarios where the SIP phone is a caller or a callee.

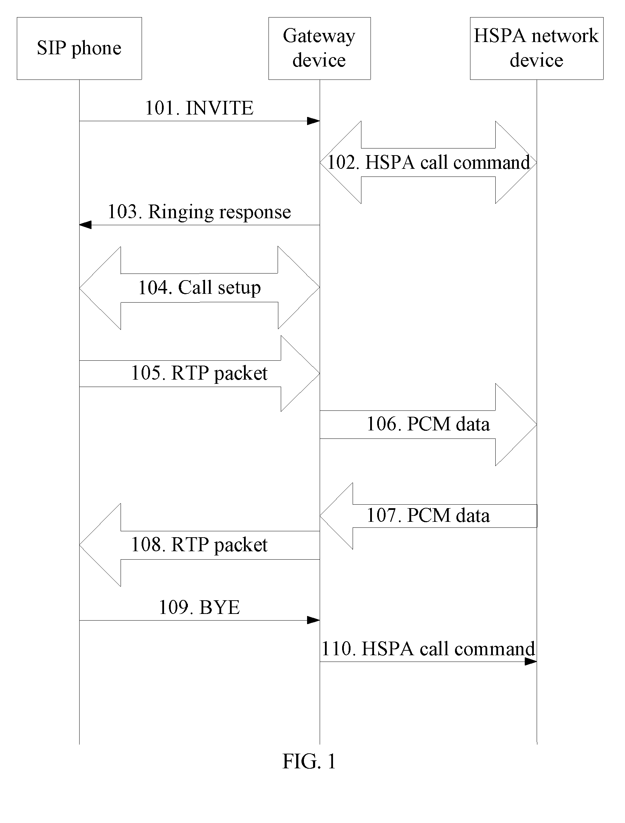

In the case that the SIP phone is the caller, the communication process of the SIP phone based communication method provided according to the embodiment of the present invention is illustrated in FIG. 1. The process includes the following blocks:
101. The SIP phone originates a call by sending a SIP INVITE message to the gateway device.
102. The gateway device receives the INVITE message and sends an HSPA call command associated with the INVITE message to the HSPA network device.

Specifically, after receiving the SIP signaling, the gateway device obtains the HSPA call command associated with the SIP signaling according to stored mapping information and sends the obtained HSPA call command to the HSPA network device.

Assume that the mapping information stored by the gateway device includes the association between the SIP INVITE message and the HSPA call origination command D and the association between the SIP BYE message and the HSPA call disconnect command + CHUP. When the gateway device connects to the wireless CS domain through an Internet card, the gateway device can translate the received INVITE message to a message that can be transferred between internal software modules of the system and then obtain the call origination command D associated with the INVITE message according to the association between the SIP INVITE message and the HSPA call origination command D, and then send the call origination command D to the Internet card to originate a wireless CS call. The call origination command D is configured to originate a voice or data service call.

Further, after receiving the SIP signaling, the gateway device needs to obtain the current state of all ports of the gateway device and determine an idle port according to obtained state information. After determining an idle port, the gateway device translates the SIP signaling to a message. Then, according to the stored mapping information, the gateway device obtains the HSPA call command associated with the SIP signaling and sends the HSPA call command to the HSPA network device via the determined idle port.
103. The gateway device exchanges the HSPA call command with the HSPA network device and sends a ringing response to the SIP phone.
104. A call is established between the gateway device and the SIP phone.
105. The SIP phone sends an RTP packet to the gateway device.
106. The gateway device receives the RTP packet and sends the PCM data associated with the RTP packet to the HSPA network device.

Specifically, after receiving the RTP packet, the gateway device translates the RTP packet to the PCM data through at least two methods. The first method is that the gateway device decodes the RTP packet to the PCM data through Digital Signal Processing, DSP; the second method is that the gateway device negotiates with the SIP phone to determine that the codec scheme of the SIP phone is G.711 and deletes the header of the RTP packet to obtain the PCM data associated with the RTP packet. After obtaining the PCM data associated with the RTP packet, the gateway device sends the PCM data to the HSPA network device.

Therefore, if the gateway device supports voice functions, that is, configured with DSP, the gateway device can obtain the PCM data through DSP. If the gateway device does not support voice functions, that is, without DSP, the gateway device may negotiate forcibly to determine that the codec scheme of the SIP phone is G.711 and delete the header of the RTP packet to obtain the PCM data.
107. The HSPA network device sends PCM data to the gateway device.
108. After receiving the PCM data, the gateway device sends an RTP packet associated with the PCM data to the SIP phone.

Specifically, the gateway device translates the PCM data to an RTP packet in a method similar to that for translating an RTP packet to PCM data in block 106. The first method is that the gateway device decodes the PCM data to an RTP packet through DSP; the second method is that the gateway device negotiates with the SIP phone to determine that the codec scheme of the SIP phone is G.711 and adds a header to the PCM data to obtain the RTP packet associated with the PCM data. After obtaining the RTP packet associated with the PCM data, the gateway device sends the RTP packet to the SIP phone.

Therefore, if the gateway device supports voice functions, that is, configured with DSP, the gateway device can obtain the RTP packet through DSP. If the gateway device does not support voice functions, that is, without DSP, the gateway device may negotiate forcible to determine that the codec scheme of the SIP phone is G.711 and add a header to the PCM data to obtain the RTP packet.
109. The SIP phone disconnects the call by sending a SIP BYE message to the gateway device.
110. The gateway device receives the BYE message and sends an HSPA call command associated with the BYE message to the HSPA network device.

The specific processing principle in this block is the same as in block 102 and is therefore omitted here.

If the gateway device connects to the wireless CS domain via an Internet card, the gateway device may translate the received BYE message to a call disconnect command + CHUP and send the call disconnect command + CHUP to the Internet card to end the conversation. In addition, when the SIP phone rings and the user does not answer, after the gateway device receives the BYE message, the gateway device also sends the call disconnect command to the Internet card.

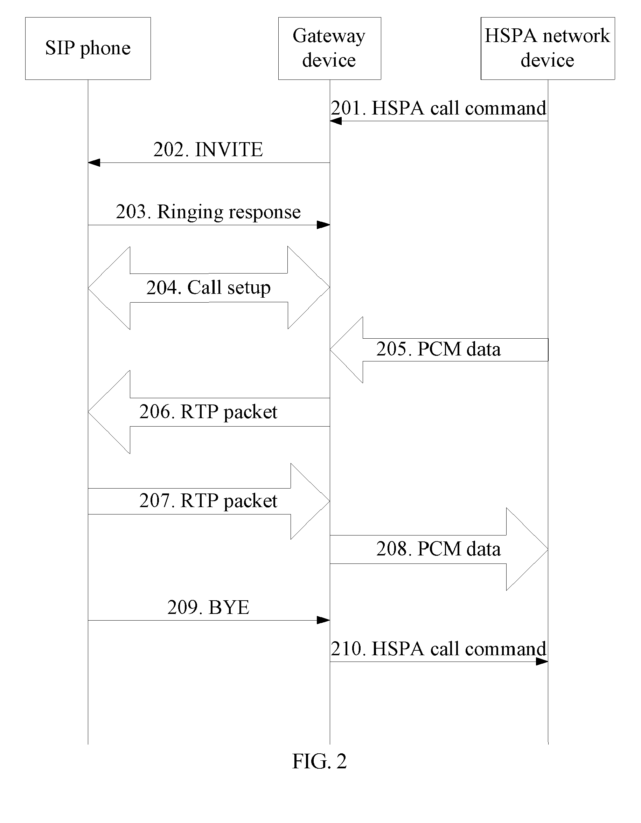

In the case that the SIP phone terminates a call, the communication process of the SIP phone based communication method provided according to the embodiment of the present invention is illustrated in FIG. 2. The process includes the following blocks:
201. The HSPA network device originates a call to the SIP phone by sending an HSPA call command that indicates an incoming call to the gateway device.

For example, if the gateway device connects to the wireless CS domain via an Internet card, after the Internet card receives a call originated from the CS domain, the Internet card sends an answer command A to the gateway device. The answer command A indicates a call to the SIP phone.
202. After receiving the HSPA call command, the gateway device sends the SIP signaling associated with the HSPA call command, that is, an INVITE message, to the SIP phone.

Specifically, after receiving the HSPA call command, the gateway device will translate the HSPA call command to a message. Then, the gateway device obtains the SIP signaling associated with the HSPA call command according to stored mapping information and sends the SIP signaling to the SIP phone.

Assume that the mapping information stored by the gateway device includes the association between the SIP INVITE message and the HSPA answer command A and the association between the SIP BYE message and the HSPA call disconnect command + CHUP. If the gateway device connects to the wireless CS domain via an Internet card, the gateway device may first translate the answer command A received by the Internet card to a message that can be transferred between internal software modules of the system, then obtain the INVITE message associated with the answer command A according to the association between the SIP INVITE message and the HSPA answer command A, and send the INVITE message to the SIP phone.

Further, after receiving the HSPA call command, the gateway device needs to obtain the current state of all ports of the gateway device and determine an idle port according to the obtained state information. After determining an idle port, the gateway device translates the HSPA call command to a message. Then, according to the stored mapping information, the gateway device obtains the SIP signaling associated with the HSPA call command and sends the SIP signaling to the HSPA network device via the determined idle port.
203. After receiving the INVITE message from the gateway device, the SIP phone sends a ringing response to the gateway device.
204. A call is established between the SIP phone and the gateway device.
205. The HSPA network device sends PCM data to the gateway device.
206. After receiving the PCM data, the gateway device sends an RTP packet associated with the PCM data to the SIP phone.

The specific processing in block 206 is the same as that in block 108.
207. The SIP phone sends an RTP packet to the gateway device.
208. The gateway device receives the RTP packet and sends PCM data associated with the RTP packet to the HSPA network device.

The specific processing in block 208 is the same as that in block 106.
209. The SIP phone disconnects the call by sending a SIP BYE message to the gateway device.
210. The gateway device receives the BYE message and sends an HSPA call command associated with the BYE message to the HSPA network device.

The specific processing in block 210 is the same as that in block 110.

Through the SIP phone based communication method provided according to the embodiment of the present invention, an HSPA call command associated with the SIP signaling received from the SIP phone is sent to the HSPA network device, or the SIP signaling associated with an HSPA call command received from the HSPA network device is sent to the SIP phone, thus establishing a signaling connection between the SIP phone and the HSPA network device. In addition, through this method, PCM data associated with the RTP packet received from the SIP phone is sent to the HSPA network device, or an RTP packet associated with the PCM data received from the HSPA network device is sent to the SIP phone, thus establishing a data connection between the SIP phone and the HSPA network device. Thereby, the SIP phone can communicate over the CS domain of the HSPA network. Further, the SIP phone can back up a voice service via a wireless CS link.

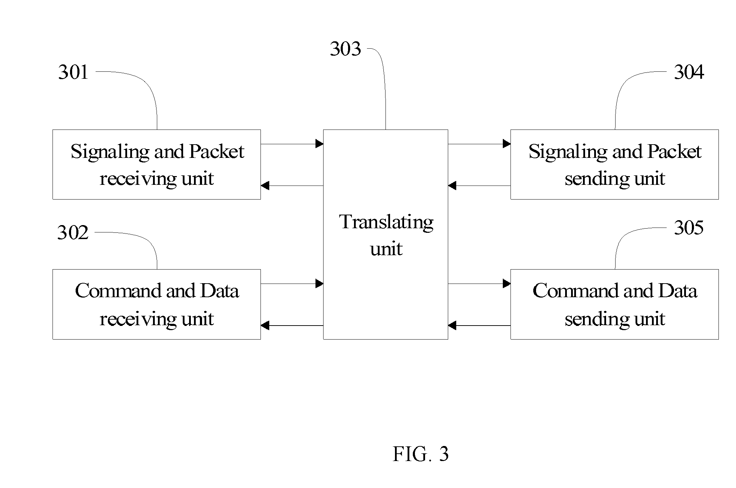

According to the above method, an embodiment of the present invention provides a gateway device. As shown in FIG. 3, the gateway device includes:
a signaling and packet receiving unit 301, configured to receive SIP signaling or an RTP packet sent by a SIP phone;
a command and data receiving unit 302, configured to receive an HSPA call command or PCM data sent by an HSPA network device;
a translating unit 303, configured to: obtain an HSPA call command associated with the SIP signaling received by the signaling and packet receiving unit 301; or obtain SIP signaling associated with the HSPA call command received by the command and data receiving unit 302; or obtain PCM data associated with the RTP packet received by the signaling and packet receiving unit 301; or obtain an RTP packet associated with the PCM data received by the command and data receiving unit 302;
a signaling and packet sending unit 304, configured to send the SIP signaling or RTP packet obtained by the translating unit 303 to the SIP phone; and
a command and data sending unit 305, configured to send the HSPA call command or PCM data obtained by the translating unit 303 to the HSPA network device.

Further, the translating unit 303 includes:
a signaling and data translating subunit, configured to obtain the HSPA call command associated with the SIP signaling according to stored mapping information; or obtain the SIP signaling associated with the HSPA call command according to the stored mapping information.

Further, the translating unit 303 includes:
a DSP subunit, configured to obtain the PCM data associated with the RTP packet received by the signaling and packet receiving unit 301 through DSP and forward the obtained PCM data to the command and data sending unit 305; or configured to obtain the RTP packet associated with the PCM data received by the command and data receiving unit 302 and forward the obtained RTP packet to the signaling and packet sending unit 304.

Further, the translating unit 303 includes:
a deleting and adding subunit, configured to delete the header of the RTP packet received by the signaling and packet receiving unit 301 by using G.711 codec to obtain the PCM data associated with the RTP packet and forward the obtained PCM data to the command and data sending unit 305; or configured to add a header to the PCM data received by the command and data receiving unit 302 by using G.711 codec to obtain the RTP packet associated with the PCM data and forward the obtained RTP packet to the signaling and packet sending unit 304.

The gateway device further includes:
a port state obtaining unit, configured to obtain state information of current ports; and
an idle port determining unit, configured to determine an idle port according to the state information obtained by the port state obtaining unit.

The signaling and packet sending unit 304 is further configured to send the SIP signaling or RTP packets obtained by the translating unit 303 to the SIP phone through the idle port determined by the idle port determining unit.

The command and data sending unit 305 is further configured to send the HSPA call command or PCM data obtained by the translating unit 303 to the HSPA network device through the idle port determined by the idle port determining unit.

The gateway device provided according to the embodiment of the present invention sends an HSPA call command associated with the SIP signaling received from the SIP phone to the HSPA network device, or sends the SIP signaling associated with an HSPA call command received from the HSPA network device to the SIP phone, thus establishing a signaling connection between the SIP phone and the HSPA network device. In addition, the gateway device sends PCM data associated with the RTP packet received from the SIP phone to the HSPA network device, or sends an RTP packet associated with the PCM data received from the HSPA network device to the SIP phone, thus establishing a data connection between the SIP phone and the HSPA network device. Thereby, the SIP phone can communicate over the CS domain of the HSPA network. Further, the SIP phone can back up a voice service via a wireless CS link.

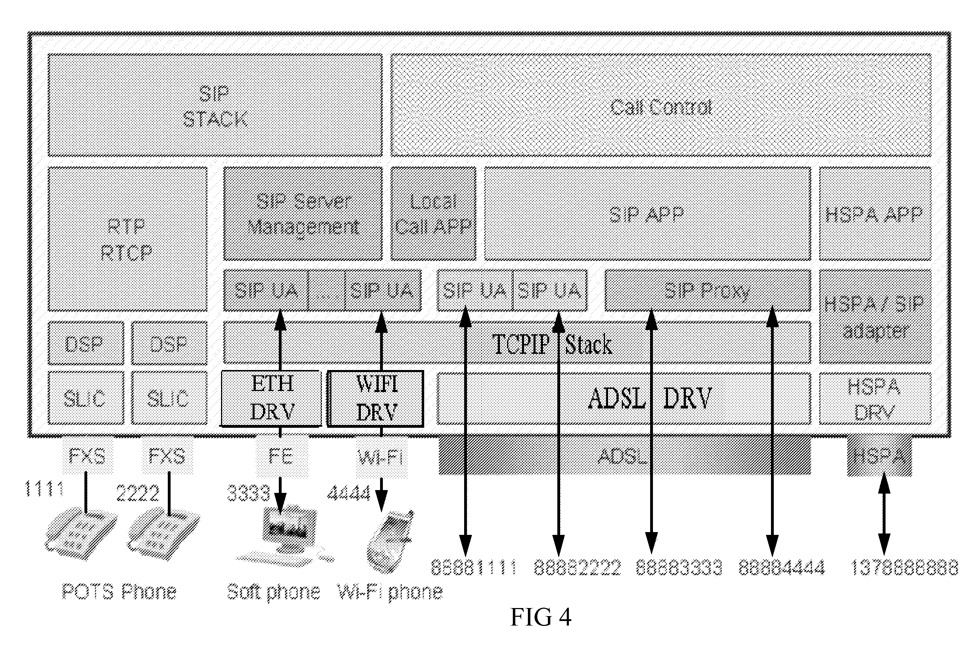

FIG. 4 illustrates an internal structure of the gateway device provided according to the embodiment of the present invention in a practical application. In FIG. 4, the SIP Server Management module is configured to manage the registration of SIP phones. The HSPA/SIP Adapter module implements the function of the translating unit 303 in the preceding embodiment. The SIP Stack module is able to translate the received SIP signaling or HSPA call command to a message. The HSPA module integrates functions of the command and data receiving unit 302 and the command and data sending unit 305 in the preceding embodiment. The SIP User Agent, SIP UA, integrates functions of the signaling and packet receiving unit 301 and the signaling and packet sending unit 304 in the previous embodiment.

The process where the gateway device translates SIP signaling to an HSPA call command is as follows: the SIP phone registers with the SIP Server Management module through SIP signaling and the SIP Server Management module forwards the SIP signaling to the SIP Stack module; the SIP Stack module parses the SIP signaling and translates the SIP signaling to a message, and notifies the Call Control module of the SIP signaling; the Call Control module obtains the state information of ports of the gateway device according to the SIP signaling and obtains an idle port according to the obtained state information; when the Call Control module obtains the idle port, the Call Control module sends the SIP signaling to the HSPA/SIP Adapter module; the HSPA/SIP Adapter module adapts the SIP signaling to an HSPA call command to obtain the associated HSPA call command and sends the obtained HSPA call command to the HSPA module; the HSPA module sends the HSPA call command to the HSPA network device.

The process where the gateway device translates an HSPA call command to SIP signaling is similar to the process where the gateway device translates SIP signaling to an HSPA call command and will not be further described.

The gateway device provided according to the embodiment of the present invention sends an HSPA call command associated with the SIP signaling received from the SIP phone to the HSPA network device, and sends the SIP signaling associated with an HSPA call command received from the HSPA network device to the SIP phone, thus establishing a signaling connection between the SIP phone and the HSPA network device. In addition, the gateway device sends PCM data associated with the RTP packet received from the SIP phone to the HSPA network device, or sends an RTP packet associated with the PCM data received from the HSPA network device to the SIP phone, thus establishing a data connection between the SIP phone and the HSPA network device. Thereby, the SIP phone can communicate over the CS domain of the HSPA network. Further, the SIP phone can back up a voice service via a wireless CS link.

Those skilled in the art understand that all or part of the blocks of the method in the embodiments of the present invention may be implemented by hardware under instructions of a computer program, which may be stored in a computer readable storage medium. When executed, the program includes the processes of the method in the preceding embodiments. The storage medium may be a magnetic disk, a compact disk, a read-only memory, ROM, or a random access memory, ROM.

Although the present invention has been described through exemplary embodiments, the invention is not limited to such embodiments. It is apparent that those skilled in the art can make various modifications and variations to the invention without departing from the scope of the present invention. The invention is intended to cover the modifications and variations provided that they fall within the scope of protection defined by the claims or their equivalents.

## Claims

1. A Session Initiation Protocol, SIP, phone based communication method, comprising:
when receiving SIP signaling from a SIP phone, sending a High Speed Packet Access, HSPA, call command associated with the SIP signaling to an HSPA network device; or, when receiving an HSPA call command from the HSPA network device, sending SIP signaling associated with the HSPA call command to the SIP phone; and
when receiving a Real-Time Transport, RTP, packet from the SIP phone, sending Pulse Code Modulation, PCM, data associated with the RTP packet to the HSPA network device; or, when receiving PCM data from the HSPA network device, sending an RTP packet associated with the PCM data to the SIP phone.

2. The method according to claim 1, wherein:
the sending the HSPA call command associated with the SIP signaling to the HSPA network device when receiving the SIP signaling from the SIP phone comprises:
receiving the SIP signaling sent by the SIP phone;
obtaining the HSPA call command associated with the SIP signaling according to stored mapping information; and
sending the HSPA call command to the HSPA network device.

3. The method according to claim 1, wherein:
the sending the SIP signaling associated with the HSPA call command to the SIP phone when receiving the HSPA call command from the HSPA network device comprises:
receiving the HSPA call command sent by the HSPA network device;
obtaining the SIP signaling associated with the HSPA call command according to the stored mapping information; and
sending the SIP signaling to the SIP phone.

4. The method according to any one of claims 1-3, wherein:
the sending the PCM data associated with the RTP packet to the HSPA network device when receiving the RTP packet from the SIP phone comprises:
receiving the RTP packet sent by the SIP phone;
obtaining the PCM data associated with the RTP packet through Digital Signal Processing, DSP; and
sending the PCM data to the HSPA network device.

5. The method according to any one of claims 1-3, wherein:
the sending the RTP packet associated with the PCM data to the SIP phone when receiving the PCM data from the HSPA network device comprises:
receiving the PCM data sent by the HSPA network device;
obtaining the RTP packet associated with the PCM data through DSP; and
sending the RTP packet to the SIP phone.

6. The method according to any one of claims 1-3, wherein:
the sending the PCM data associated with the RTP packet to the HSPA network device when receiving the RTP packet from the SIP phone comprises:
receiving the RTP packet sent by the SIP phone;
deleting a header of the RTP packet by using G.711 codec to obtain the PCM data associated with the RTP packet; and
sending the PCM data to the HSPA network device.

7. The method according to any one of claims 1-3, wherein:
the sending the RTP packet associated with the PCM data to the SIP phone when receiving the PCM data from the HSPAnetwork device comprises:
receiving the PCM data sent by the HSPA network device;
adding a header to the PCM data by using G.711 codec to obtain the RTP packet associated with the PCM data; and
sending the RTP packet to the SIP phone.

8. The method according to claim 1, wherein:
the sending the HSPA call command associated with the SIP signaling to the HSPA network device comprises:
obtaining state information of current ports;
determining an idle port according to the state information; and
sending the HSPA call command to the HSPA network device through the determined idle port.

9. The method according to claim 1, wherein:
the sending the SIP signaling associated with the HSPA call command to the SIP phone comprises:
obtaining state information of current ports;
determining an idle port according to the state information; and
sending the SIP signaling to the SIP phone through the determined idle port.

10. A gateway device, comprising:
a signaling and packet receiving unit, configured to receive Session Initiation Protocol, SIP, signaling or a Real-Time Transport Protocol, RTP, packet sent by a SIP phone;
a command and data receiving unit, configured to receive a High Speed Packet Access, HSPA, call command or Pulse Code Modulation, PCM, data sent by an HSPA network device;
a translating unit, configured to: obtain an HSPA call command associated with the SIP signaling received by the signaling and packet receiving unit; or obtain SIP signaling associated with the HSPA call command received by the command and data receiving unit; or obtain PCM data associated with the RTP packet received by the signaling and packet receiving unit; or obtain an RTP packet associated with the PCM data received by the command and data receiving unit;
a signaling and packet sending unit, configured to send the SIP signaling or the RTP packet obtained by the translating unit to the SIP phone; and
a command and data sending unit, configured to send the HSPA call command or the PCM data obtained by the translating unit to the HSPA network device.

11. The gateway device according to claim 10, wherein the translating unit comprises:
a signaling and data translating subunit, configured to obtain the HSPA call command associated with the SIP signaling according to stored mapping information; or obtain the SIP signaling associated with the HSPA call command according to the stored mapping information.

12. The gateway device according to claim 10 or 11, wherein the translating unit further comprises:
a Digital Signal Processing, DSP, subunit, configured to obtain the PCM data associated with the RTP packet received by the signaling and packet receiving unit through DSP and forward the obtained PCM data to the command and data sending unit; or configured to obtain the RTP packet associated with the PCM data received by the command and data receiving unit and forward the obtained RTP packet to the signaling and packet sending unit.

13. The gateway device according to claim 10 or 11, wherein the translating unit further comprises:
a deleting and adding subunit, configured to delete a header of the RTP packet received by the signaling and packet receiving unit by using G.711 codec to obtain the PCM data associated with the RTP packet and forward the obtained PCM data to the command and data sending unit; or configured to add a header to the PCM data received by the command and data receiving unit by using G.711 codec to obtain the RTP packet associated with the PCM data and forward the obtained RTP packet to the signaling and packet sending unit.

14. The gateway device according to claim 10, further comprising:
a port state obtaining unit, configured to obtain state information of current ports;
an idle port determining unit, configured to determine an idle port according to the state information obtained by the port state obtaining unit;
the signaling and packet sending unit, further configured to send the SIP signaling or the RTP packet obtained by the translating unit to the SIP phone through the idle port determined by the idle port determining unit; and
the command and data sending unit, further configured to send the HSPA call command or the PCM data obtained by the translating unit to the HSPA network device through the idle port determined by the idle port determining unit.

## Amended claims

### Amended claims in accordance with Rule 137(2) EPC.

**1.** A Session Initiation Protocol, SIP, phone based communication method, **characterized in that**, the method permitted by a gateway device, the gateway device connected to a Session Initiation Protocol, SIP, phone, and connected to a High Speed Packet Access, HSPA, network device via an Internet card, comprising:
when receiving, by the gateway device, SIP signaling from the SIP phone, sending, by the gateway device, an HSPA call command associated with the SIP signaling to the HSPA network device; or, when receiving, by the gateway device, an HSPA call command from the HSPA network device, sending, by the gateway device, SIP signaling associated with the HSPA call command to the SIP phone; and
when receiving, by the gateway device, a Real-Time Transport, RTP, packet from the SIP phone, sending, by the gateway device, Pulse Code Modulation, PCM, data associated with the RTP packet to the HSPA network device; or, when receiving, by the gateway device, PCM data from the HSPA network device, sending, by the gateway device, an RTP packet associated with the PCM data to the SIP phone.

**2.** The method according to claim 1, wherein:
the sending the HSPA call command associated with the SIP signaling to the HSPA network device when receiving the SIP signaling from the SIP phone comprises:
receiving the SIP signaling sent by the SIP phone;
obtaining the HSPA call command associated with the SIP signaling according to stored mapping information; and
sending the HSPA call command to the HSPA network device.

**3.** The method according to claim 1, wherein:
the sending the SIP signaling associated with the HSPA call command to the SIP phone when receiving the HSPA call command from the HSPA network device comprises:
receiving the HSPA call command sent by the HSPA network device;
obtaining the SIP signaling associated with the HSPA call command according to the stored mapping information; and
sending the SIP signaling to the SIP phone.

**4.** The method according to any one of claims 1-3, wherein:
the sending the PCM data associated with the RTP packet to the HSPA network device when receiving the RTP packet from the SIP phone comprises:
receiving the RTP packet sent by the SIP phone;
obtaining the PCM data associated with the RTP packet through Digital Signal Processing, DSP; and
sending the PCM data to the HSPA network device.

**5.** The method according to any one of claims 1-3, wherein:
the sending the RTP packet associated with the PCM data to the SIP phone when receiving the PCM data from the HSPA network device comprises:
receiving the PCM data sent by the HSPA network device;
obtaining the RTP packet associated with the PCM data through DSP; and
sending the RTP packet to the SIP phone.

**6.** The method according to any one of claims 1-3, wherein:
the sending the PCM data associated with the RTP packet to the HSPA network device when receiving the RTP packet from the SIP phone comprises:
receiving the RTP packet sent by the SIP phone;
deleting a header of the RTP packet by using G.711 codec to obtain the PCM data associated with the RTP packet; and
sending the PCM data to the HSPA network device.

**7.** The method according to any one of claims 1-3, wherein:
the sending the RTP packet associated with the PCM data to the SIP phone when receiving the PCM data from the HSPA network device comprises:
receiving the PCM data sent by the HSPA network device;
adding a header to the PCM data by using G.711 codec to obtain the RTP packet associated with the PCM data; and
sending the RTP packet to the SIP phone.

**8.** The method according to claim 1, wherein:
the sending the HSPA call command associated with the SIP signaling to the HSPA network device comprises:
obtaining state information of current ports;
determining an idle port according to the state information; and
sending the HSPA call command to the HSPA network device through the determined idle port.

**9.** The method according to claim 1, wherein:
the sending the SIP signaling associated with the HSPA call command to the SIP phone comprises:
obtaining state information of current ports;
determining an idle port according to the state information; and
sending the SIP signaling to the SIP phone through the determined idle port.

**10.** A gateway device, **characterized in that** the gateway device is connected to a Session Initiation Protocol, SIP, phone, and connected to a High Speed Packet Access, HSPA, network device via an Internet card, comprising:
a signaling and packet receiving unit (301), configured to SIP signaling or a Real-Time Transport Protocol, RTP, packet sent by the SIP phone;
a command and data receiving unit (302), configured to receive an HSPA call command or Pulse Code Modulation, PCM, data sent by the HSPA network device;
a translating unit (303), configured to: obtain an HSPA call command associated with the SIP signaling received by the signaling and packet receiving unit (301); or obtain SIP signaling associated with the HSPA call command received by the command and data receiving unit (302); or obtain PCM data associated with the RTP packet received by the signaling and packet receiving unit (301); or obtain an RTP packet associated with the PCM data received by the command and data receiving unit (302);
a signaling and packet sending unit (304), configured to send the SIP signaling or the RTP packet obtained by the translating unit to the SIP phone; and
a command and data sending unit (305), configured to send the HSPA call command or the PCM data obtained by the translating unit to the HSPA network device.

**11.** The gateway device according to claim 10, wherein the translating unit (303) comprises:
a signaling and data translating subunit (304), configured to obtain the HSPA call command associated with the SIP signaling according to stored mapping information; or obtain the SIP signaling associated with the HSPA call command according to the stored mapping information.

**12.** The gateway device according to claim 10 or 11, wherein the translating unit (303) further comprises:
a Digital Signal Processing, DSP, subunit, configured to obtain the PCM data associated with the RTP packet received by the signaling and packet receiving unit (301) through DSP and forward the obtained PCM data to the command and data sending unit (305); or configured to obtain the RTP packet associated with the PCM data received by the command and data receiving unit (302) and forward the obtained RTP packet to the signaling and packet sending unit (304).

**13.** The gateway device according to claim 10 or 11, wherein the translating unit (303) further comprises:
a deleting and adding subunit, configured to delete a header of the RTP packet received by the signaling and packet receiving unit (301) by using G.711 codec to obtain the PCM data associated with the RTP packet and forward the obtained PCM data to the command and data sending unit (305); or configured to add a header to the PCM data received by the command and data receiving unit (302) by using G.711 codec to obtain the RTP packet associated with the PCM data and forward the obtained RTP packet to the signaling and packet sending unit (304).

**14.** The gateway device according to claim 10, further comprising:
a port state obtaining unit, configured to obtain state information of current ports;
an idle port determining unit, configured to determine an idle port according to the state information obtained by the port state obtaining unit;
the signaling and packet sending unit (304), further configured to send the SIP signaling or the RTP packet obtained by the translating unit (303) to the SIP phone through the idle port determined by the idle port determining unit; and
the command and data sending unit (305), further configured to send the HSPA call command or the PCM data obtained by the translating unit to the HSPA network device through the idle port determined by the idle port determining unit.
